# DEMANDE DE BREVET EUROPEEN

(11) **EP 4 123 771 A2**
(43) Date de publication de la demande: **25.01.2023**
(21) Numéro de dépôt: 22186158.6
(22) Date de dépôt: 21.07.2022
(51) Int. Cl.: H01M 8/2475, H01M 8/249, H01M 8/12

(54) **INSTALLATION ÉLECTROCHIMIQUE OPÉRANT À HAUTE TEMPÉRATURE ET PROCÉDÉ ASSOCIÉ**

(30) Priorité: 22.07.2021 FR 2107954
(71) Demandeur: Technip Energies France, 92741 Nanterre Cedex (FR)
(72) Inventeur: Sellini, Marc, 92741 NANTERRE CEDEX (FR); Boyault, Xavier, 92741 NANTERRE CEDEX (FR); de Sorbier, Thibault, 92741 NANTERRE CEDEX (FR)
(74) Mandataire: Lavoix

(57) **Abrégé**

L'installation (10) comporte une pluralité d'empilements (14) de mise en œuvre de réactions électrochimiques, un four (16) de chauffage comprenant une enceinte (60) destinée à recevoir les empilements (14), et un système de chauffage (62).

L'installation (10) comporte au moins une baie (12) comportant une structure autoportante comportant plusieurs étages superposés d'empilements (14) ou/et comportant plusieurs structures autoportantes définissant plusieurs étages superposés d'empilements (14).

Chaque structure autoportante comprend un distributeur de fluide propre à alimenter chaque empilement (14) en au moins un fluide ou/et à collecter au moins un fluide à partir de chaque empilement (14).

L'enceinte (60) est propre à contenir au moins une baie (12), les étages d'empilements (14) de la ou de chaque baie (12) contenue dans l'enceinte (60) étant destinés à être chauffés conjointement par le système de chauffage (62).

## Description

La présente invention concerne une installation électrochimique, comportant une pluralité d'empilements de mise en œuvre de réactions électrochimiques, notamment pour la production d'électricité, la production de composés gazeux ou la co-électrolyse et un four de chauffage comprenant une enceinte destinée à recevoir le ou chaque empilement, et un système de chauffage.

Cette installation est destinée à être disposée à terre ou en mer, pour la production d'électricité à partir de combustibles tels que l'hydrogène, le méthane, le propane, le butane, les gaz de fermentation, la biomasse gazéifiée, les biocarburants et carburants de synthèse, l'ammoniac, le méthanol, le monoxyde de carbone, le gaz naturel ou/et les vapeurs de peinture.

En variante ou en complément, l'installation est destinée à la production d'un composé gazeux, par exemple de l'hydrogène, à partir d'électricité produite par exemple par des sources d'électricité renouvelable, notamment par des éoliennes, des hydroliennes ou des panneaux solaires ou plus généralement, par un réseau électrique.

Dans encore une autre variante, l'installation est destinée à la production de composés gazeux par co-électrolyse, par exemple à la production d'un gaz de synthèse destiné à la synthèse de constituants chimiques par électrolyse, à partir d'eau et de dioxyde de carbone.

L'installation comprend une pluralité d'empilements qui sont par exemple des cellules d'électrolyse à oxydes solides (ou « SOEC » selon l'acronyme anglais de « Solid Oxide Electrolysis Cells ») ou des piles à combustibles à oxydes solides (ou « SOFC » selon l'acronyme anglais de « Solid Oxide Fuel Cells »). L'invention est également applicable aux autres technologies de piles à combustible à haute température (plus de 100°C).

Ces piles sont prévues essentiellement pour les applications stationnaires avec une puissance de sortie allant de 1 kW à 20 MW. Leurs rejets gazeux peuvent être utilisés pour alimenter une turbine à gaz secondaire afin d'accroître le rendement électrique. Les rejets gazeux peuvent aussi alimenter un brûleur catalytique générant de la vapeur directement utilisable ou valorisable. De la vapeur d'eau est par exemple produite afin d'augmenter le rendement électrique global du système si cette vapeur d'eau est utilisée pour produire de l'électricité supplémentaire.

Un élément de SOFC (ou cellule électrochimique) est généralement constitué de quatre couches, trois d'entre elles étant des céramiques. Il possède une épaisseur typique de quelques millimètres. Des dizaines ou des centaines de ces éléments sont alors superposés en série pour former un empilement ou « pile » (ou « stack »).

Dans ces éléments, les ions oxygène sont déplacés au travers d'une membrane en oxyde solide pris comme électrolyte à haute température, afin de réagir avec le combustible gazeux, par exemple l'hydrogène, du côté anode.

Les céramiques utilisées dans les SOFC ne deviennent actives électriquement et ioniquement que lorsqu'elles atteignent une très haute température. Par conséquent, les empilements doivent atteindre des températures de l'ordre de 600°C à 1 200°C pour former une membrane active.

En raison de la haute température de fonctionnement des SOFC ou des SOEC, il n'est pas nécessaire de prévoir un catalyseur onéreux (du platine par exemple), contrairement aux piles à combustible à membrane échangeuse de protons. Ceci signifie que les SOFC ou les SOEC ne subissent pas d'empoisonnement catalytique par le monoxyde de carbone, les rendant par conséquent hautement adaptables.

L'expansion thermique demande un chauffage lent et uniforme à son début. Habituellement, une heure ou plus de montée en température sont nécessaires.

Dans les installations connues, les empilements de piles à combustible ou de cellules d'électrolyseur sont intégrés dans une enceinte calorifugée d'un four de faible taille normalement utilisé pour la cuisson de céramiques. Traditionnellement, les empilements sont chargés individuellement dans une enceinte calorifugée et sont posés au fond de l'enceinte en nombre inférieur à quatre. Des utilités sont associées à chaque enceinte et branchées sur chaque empilement pour fournir les différents fluides nécessaires et pour récupérer les fluides produits. Ces utilités sont appelées en anglais Balance Of Plant (BOP) et permettent également le traitement du gaz ainsi que sa montée en température via de la récupération thermique avant de réagir au sein des empilements.

Le déploiement à grande échelle d'unités de type SOFC ou SOEC implique donc l'accumulation d'un nombre très important d'enceintes calorifugées et du même nombre important de BOP.

L'accumulation d'enceintes de faible capacité pose de nombreux problèmes, notamment des contraintes importantes d'aménagement des enceintes pour permettre leur accès en cas de manutention.

Ainsi, les enceintes ne peuvent être positionnées côte-à-côte de manière compacte, ce qui implique le besoin de zones de dégagement, de structures multi-étagées, ainsi que la multiplication de tuyauteries et de vannes d'isolation.

Cette complexité, en plus de ne pas pouvoir permettre un arrangement compact, augmente donc significativement les longueurs de lignes, le nombre de capteurs et de vannes. Les pertes de charge globales dans le système sont alors accrues et l'efficacité énergétique de la solution diminue. De plus, cette multiplication de lignes implique des risques de fuites ou d'explosion démultipliés.

De plus, la multiplication de petites enceintes nécessite de fournir de multiples composants d'isolation, et de démultiplier les résistances de chauffe des enceintes.

Cet arrangement fragmenté implique également des difficultés opératoires, puisque chaque enceinte doit être amenée à la température de fonctionnement de manière indépendante, ce qui implique un temps de démarrage et d'arrêt de l'installation très important.

Un but de l'invention est donc de fournir une installation électrochimique fonctionnant à haute température, destinée par exemple à la génération d'électricité et/ou de composés gazeux ou à la co-électrolyse, qui soit peu encombrante, tout en restant fiable et simple à opérer.

À cet effet, l'invention a pour objet une installation du type précité, caractérisée en ce que l'installation comporte au moins une baie, la ou chaque baie comportant une structure autoportante comportant plusieurs étages superposés d'empilements ou/et la ou chaque baie comportant plusieurs structures autoportantes définissant plusieurs étages superposés d'empilements, chaque structure autoportante comprenant un distributeur de fluide propre à alimenter chaque empilement en au moins un fluide ou/et à collecter au moins un fluide à partir de chaque empilement, l'enceinte étant propre à contenir au moins une baie, les étages d'empilements de la ou de chaque baie contenue dans l'enceinte étant destinés à être chauffés conjointement par le système de chauffage.

L'installation selon l'invention peut comprendre l'une ou plusieurs des caractéristiques suivantes, prise(s) isolément ou suivant toute combinaison techniquement possible :
- l'enceinte est montée à demeure sur un sol ou sur un plancher ;
- l'installation comprend une pluralité de baies, l'enceinte étant propre à contenir la pluralité de baies, les empilements des baies contenues dans l'enceinte étant destinés à être chauffés conjointement par le système de chauffage ;
- le four de chauffage comporte intérieurement un système de brassage d'atmosphère propre à brasser l'atmosphère dans l'enceinte autour de chaque baie ;
- le four de chauffage comporte un injecteur de gaz neutre dans l'enceinte, propre à engendrer, lors du fonctionnement du four de chauffage, une surpression de gaz dans l'enceinte, le four de chauffage comportant avantageusement un analyseur de gaz extrait hors de l'enceinte ;
- le nombre d'empilements dans chaque étage d'empilements d'une baie est supérieur à quatre ;
- l'installation comprend un système commun de distribution de fluides situé hors du four, le système de distribution comprenant au moins un conduit d'amenée d'un premier fluide d'alimentation destiné à chaque empilement et au moins un conduit d'évacuation d'un premier fluide produit dans chaque empilement, le conduit d'amenée de premier fluide d'alimentation et le conduit d'évacuation de premier fluide produit étant destinés à être raccordés simultanément à une pluralité de structures autoportantes de baie contenues dans le four, le distributeur de fluide de chaque structure autoportante de baie disposée dans l'enceinte comportant :
   * une première conduite commune d'alimentation en premier fluide, raccordée à chaque empilement de la baie et destinée à être raccordée de manière amovible au conduit d'amenée de premier fluide d'alimentation lorsque la structure autoportante de baie est disposée dans l'enceinte;
   * une première conduite commune de récupération de premier fluide produit raccordée à chaque empilement et destinée à être raccordée de manière amovible au conduit d'évacuation de premier fluide produit lorsque la structure autoportante de baie est disposée dans l'enceinte ;
- le système de distribution comprend au moins un conduit d'amenée d'un deuxième fluide d'alimentation destiné à chaque empilement et au moins un conduit d'évacuation d'un deuxième fluide produit dans chaque empilement, le conduit d'amenée de deuxième fluide d'alimentation et le conduit d'évacuation de deuxième fluide produit étant destinés à être raccordés simultanément à la pluralité de structures autoportantes de baie contenues dans le four, le distributeur de fluide de chaque structure autoportante de baie disposée dans l'enceinte comportant :
   * une deuxième conduite commune d'alimentation en deuxième fluide, raccordée à chaque empilement de la baie et destinée à être raccordée de manière amovible au conduit d'amenée de deuxième fluide d'alimentation lorsque la structure autoportante de baie est disposée dans l'enceinte ;
   * une deuxième conduite commune de récupération de deuxième fluide produit raccordée à chaque empilement et destinée à être raccordée de manière amovible au conduit d'évacuation de deuxième fluide produit lorsque la structure autoportante de baie est disposée dans l'enceinte ;
- le système de distribution comporte pour chaque structure autoportante de baie :
   * un premier piquage d'alimentation piqué sur le conduit d'amenée de premier fluide d'alimentation et destiné à se connecter de manière amovible à la première conduite commune d'alimentation en premier fluide de la structure autoportante de baie ;
   * un deuxième piquage d'évacuation piqué sur le conduit d'évacuation de premier fluide produit et destiné à se connecter de manière amovible à la première conduite commune de récupération de premier fluide produit de la structure autoportante de baie ;
- l'enceinte s'étend longitudinalement suivant un axe longitudinal, plusieurs structures autoportantes de baie étant disposées le long de l'axe longitudinal, le conduit d'amenée de premier fluide d'alimentation et le conduit d'évacuation de premier fluide produit s'étendant parallèlement à l'axe longitudinal ;
- chaque structure autoportante de baie est montée mobile par rapport au four entre une position d'opération disposée dans l'enceinte et une position de maintenance, disposée hors de l'enceinte ;
- l'enceinte présente, pour une baie ou un groupe de baies, une porte latérale, chaque structure autoportante de la baie ou du groupe de baies étant propre à être extraite à travers la porte latérale via un chariot élévateur ou dans laquelle l'enceinte comporte pour une baie ou un groupe de baies, une porte supérieure, chaque structure autoportante de la baie ou du groupe de baies étant propre à être extraite à travers la porte supérieure par un treuil d'un pont roulant ;
- l'empilement de production d'électricité est une pile à combustible, en particulier une pile à combustible à oxyde solide, la pile à combustible étant propre à recevoir un premier fluide d'alimentation formé d'un combustible et à produire un premier fluide produit comprenant de l'eau, la pile à combustible étant propre à recevoir un deuxième fluide d'alimentation comprenant de l'air, et étant propre à produire un deuxième fluide produit ;
   ou dans laquelle l'empilement de production est un empilement de génération d'au moins un composé gazeux, notamment une cellule d'électrolyse ou de co-électrolyse, la cellule d'électrolyse étant avantageusement propre à recevoir un premier fluide d'alimentation comprenant de l'eau ou de l'eau et du dioxyde de carbone, et à produire un premier fluide produit comprenant de l'hydrogène ou de l'hydrogène et du monoxyde de carbone, la cellule d'électrolyse étant avantageusement propre à recevoir un deuxième fluide d'alimentation comprenant de l'air, et à produire un deuxième fluide produit comprenant de l'oxygène ;
- le système de chauffage comporte au moins une résistance électrique disposée dans l'enceinte, la ou chaque résistance électrique étant avantageusement insérée dans au moins un tube métallique muni d'orifices traversant et étant de préférence placée à l'arrière d'un moufle disposé dans l'enceinte ;
- chaque empilement comporte une pluralité d'éléments unitaires d'empilement, disposés les uns sur les autres, chaque élément unitaire comportant une première électrode, un électrolyte, notamment un électrolyte solide, et une deuxième électrode de polarité opposée à la première électrode.

L'invention a également pour objet un procédé électrochimique, comportant les étapes suivantes :
* fourniture d'une installation telle que définie plus haut, l'enceinte du four contenant au moins une baie comportant une structure autoportante comportant plusieurs étages superposés d'empilements ou/et chaque baie comportant plusieurs structures autoportantes définissant plusieurs étages superposés d'empilements ;
* activation du système de chauffage dans l'enceinte pour chauffer conjointement les étages d'empilements de la ou de chaque baie contenue dans l'enceinte ;
* mise en œuvre d'une réaction électrochimique dans chaque empilement de chaque baie contenue dans l'enceinte, notamment pour de la production d'électricité, de la production de composés gazeux et/ou de la co-électrolyse.

Le procédé selon l'invention peut comprendre l'une ou plusieurs des caractéristiques suivantes, prise(s) isolément ou suivant toute combinaison techniquement possible :
- le système de chauffage porte l'atmosphère dans l'enceinte au contact de la ou de chaque baie à une température supérieure à 400°C, de préférence comprise entre 400°C et 1300°C, avantageusement entre 600°C et 1200°C ;
- le procédé comporte un brassage de l'atmosphère autour de chaque baie par un système de brassage d'atmosphère, la température de chaque empilement d'une baie ou de chaque baie étant au plus différente de 10% de la température moyenne des empilements de la baie ou de chaque baie lors du chauffage conjoint des étages d'empilements ;
- lors du chauffage conjoint des étages d'empilement de la ou de chaque baie, le procédé comporte une étape de retrait d'au moins une structure autoportante d'une baie de l'enceinte, au moins une autre structure autoportante d'une baie restant disposée dans l'enceinte, et le procédé comporte avantageusement, après l'étape de retrait, une étape de remise en place de la structure autoportante de la baie extraite, ou de mise en place d'une autre structure autoportante de baie en remplacement de la structure autoportante de baie extraite.

L'invention sera mieux décrite à la lecture de la description qui va suivre, donnée uniquement à titre d'exemple, et faite à se référant aux desseins annexés, sur lesquels :
- [Fig 1] la figure 1 est une vue de dessus d'une première installation de génération selon l'invention ;
- [Fig 2] la figure 2 est une vue prise en coupe partielle, prise suivant un plan vertical, de l'installation de la figure 1 ;
- [Fig 3] la figure 3 est une vue en perspective partielle d'une baie comprenant une pluralité d'empilements, la baie étant destinée à être introduite dans une enceinte de l'installation de la figure 2 ;
- [Fig 4] la figure 4 est une vue analogue à la figure 2, lors de l'introduction d'une baie dans une enceinte de l'installation de la figure 2 ;
- [Fig 5] la figure 5 est une vue illustrant un côté de l'enceinte de chauffage, avec les connexions de chaque baie vers des conduites communes ;
- [Fig 6] la figure 6 illustre une variante d'installation selon l'invention.

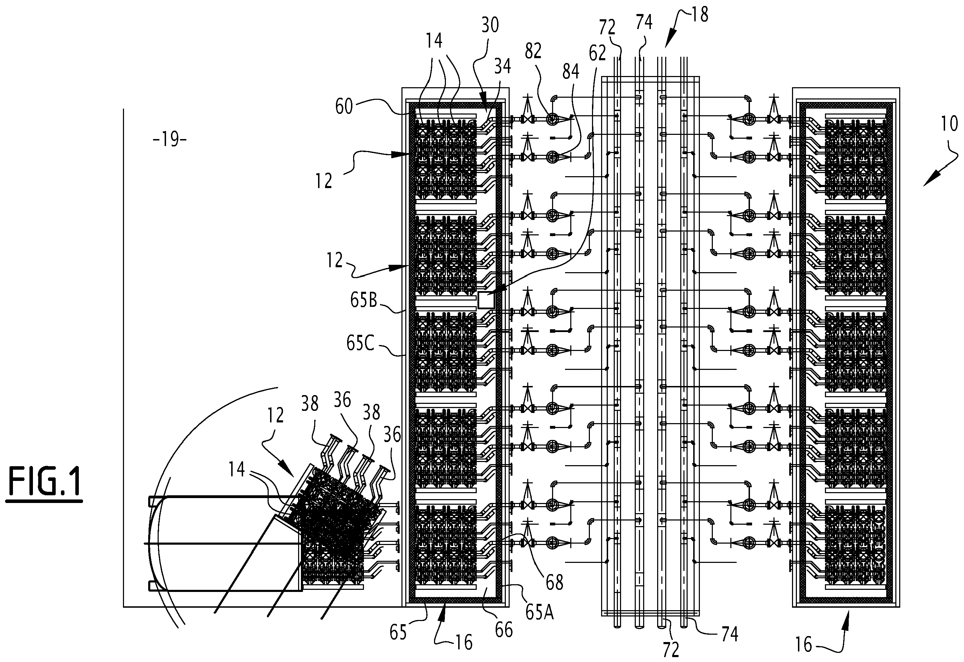

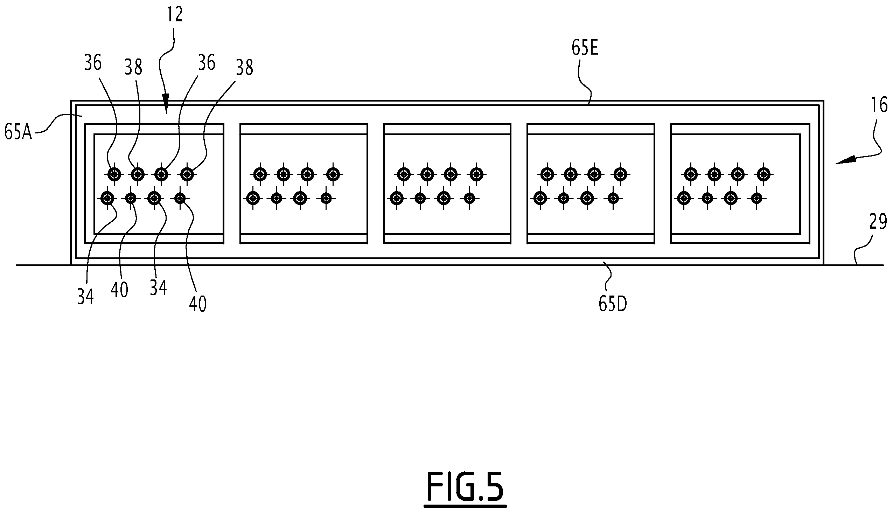

Une première installation 10 électrochimique selon l'invention, destinée notamment à la génération d'électricité et/ou à la production de composés gazeux et/ou à la co-électrolyse est illustrée par les figures 1 à 5.

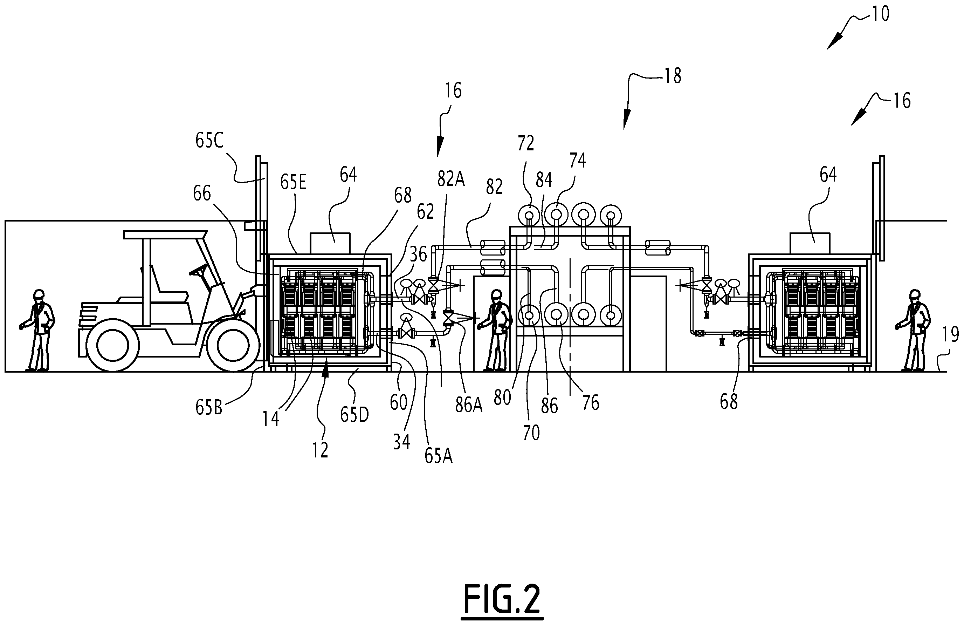

Comme représenté sur les figures 1 et 2, l'installation 10 comporte une pluralité de baies 12 individuelles, chaque baie 12 portant une pluralité d'empilements 14 de mise en œuvre de réactions électrochimiques, en particulier, de production d'électricité, de production de composés gazeux ou de co-électrolyse.

Selon l'invention, l'installation de génération 10 comporte au moins un four 16 destiné à contenir au moins une baie 12, et à chauffer conjointement les empilements 14 de la ou de chaque baie 12 contenues dans le four 16.

L'installation de génération 10 comporte un système 18 de distribution de fluide destiné à être raccordé fluidiquement à chaque baie 12 reçue dans un four 16.

L'installation 10 est destinée à être disposée à terre ou en mer, par exemple sur une plateforme en mer. Elle repose sur un sol ou sur un plancher 19.

Chaque empilement 14 comporte généralement une pluralité d'éléments unitaires d'empilement, disposés les uns sur les autres. Chaque élément unitaire (ou cellule) comporte une première électrode, un électrolyte, notamment un électrolyte solide, et une deuxième électrode de polarité opposée à la première électrode.

Les électrodes sont par exemple formées d'éléments unitaires plans, et la géométrie de l'empilement 14 est alors une géométrie de type sandwich. En variante, chaque électrode est formée d'un élément tubulaire, et la géométrie de l'empilement 14 est alors de type tubulaire.

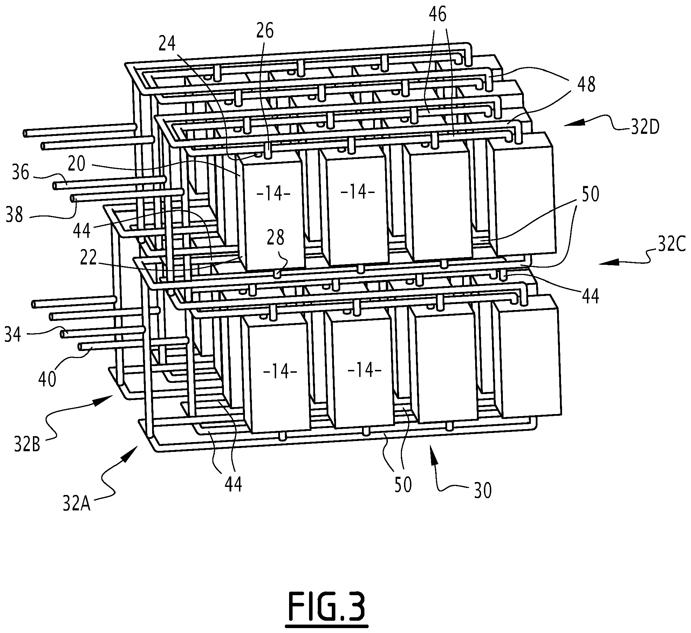

En référence à la figure 3, chaque empilement 14 comporte une première entrée 22 d'alimentation en un premier fluide d'alimentation, et une première sortie 24 de récupération d'un premier fluide produit. La première entrée 22 et la première sortie 24 sont en communication fluidique avec chaque première électrode de chaque élément unitaire contenue dans l'empilement 14.

De même, l'empilement 14 comporte une deuxième entrée 26 d'un deuxième fluide d'alimentation et une deuxième sortie 28 de récupération d'un deuxième fluide produit. La deuxième entrée 26 et la deuxième sortie 28 sont en communication fluidique avec chaque deuxième électrode de chaque élément unitaire contenue dans l'empilement 14.

L'empilement 14 est par exemple une pile à combustible à oxyde solide (ou « SOFC », tel que défini plus haut). Dans ce cas, la première électrode est une anode, et le premier fluide d'alimentation est un combustible contenant ou constitué en particulier d'hydrogène, de méthane, de propane, de butane, de gaz de fermentation, de biomasse gazéifiée, de biocarburants et/ou de carburants de synthèse, d'ammoniac, de méthanol, de monoxyde de carbone, de gaz naturel ou/et de vapeurs de peinture. Le premier fluide produit est alors généralement de l'eau, du dioxyde de carbone et comporte parfois un excédent de combustible n'ayant pas réagi au sein de l'empilement 14.

La deuxième électrode est une cathode. Dans ce même cas de pile à combustible à oxyde solide (ou « SOFC », tel que défini plus haut), le deuxième fluide d'alimentation est de l'air. Le deuxième fluide produit est un reste d'air appauvri en oxygène.

L'électrolyte agit comme une membrane qui sépare le combustible du côté de l'anode de l'air du côté de la cathode. Il est par exemple formé de matériau céramique, par exemple basé sur de l'oxyde de zirconium.

Un courant d'électrons est collecté aux bornes des électrodes de chaque élément unitaire pour être fourni à un réseau électrique.

En variante, l'empilement est une cellule d'électrolyse à oxyde solide (« SOEC », tel que défini plus haut).

Dans ce cas, le premier fluide d'alimentation à l'anode est de l'air et le premier fluide produit est de l'oxygène. Le deuxième fluide d'alimentation à la cathode est de la vapeur d'eau, et le deuxième fluide produit est de l'hydrogène.

En variante encore, l'empilement 14 est destinée à la co-électrolyse de composés gazeux, par exemple de vapeur d'eau et de dioxyde de carbone, pour former par exemple un gaz de synthèse destiné à la synthèse de constituants chimiques.

La réaction d'électrolyse se produit sous l'effet d'un courant électrique fourni aux bornes des électrodes de chaque élément unitaire, à partir par exemple, d'un réseau électrique, ou/et d'une installation de production d'énergie électrique, en particulier d'une installation de production d'électricité renouvelable comprenant par exemple au moins une éolienne, au moins une hydrolienne ou/et au moins un panneau solaire.

Le nombre d'éléments unitaires dans chaque empilement 14 est de préférence supérieur à dix et est notamment compris entre cinquante et deux cent.

En référence à la figure 3, la baie 12 est une structure autoportante présentant plusieurs étages, déplaçable individuellement et d'un seul tenant par rapport à d'autres autres baies 12. Dans une variante, la baie 12 est un empilement d'étages de structures autoportantes.

Chaque structure autoportante est propre à être introduite dans le four 16 et à être extraite hors du four 16 d'un seul tenant.

Sur la figure 3, une baie 12 comprenant une structure autoportante présentant deux étages élémentaires identiques est illustrée.

Chaque structure autoportante d'une baie 12 porte une pluralité d'empilements 14 qui sont déplaçables conjointement les uns avec les autres, indépendamment des empilements 14 présents dans d'autres baies 12 contenues dans le four 16 ou le cas échéant, indépendamment des empilements 14 présents dans une autre structure autoportante de la même baie 12.

Chaque structure autoportante d'une baie 12 comporte en outre un distributeur de fluide 30 propre à la structure autoportante de la baie 12, destiné à alimenter chaque empilement 14 de la baie 12 en premier fluide d'alimentation et en deuxième fluide d'alimentation, à partir du système de distribution 18 commun à toutes les baies 12 et à récupérer, à partir de chaque empilement 14 de la baie 12, le premier fluide produit et le deuxième fluide produit pour les ramener vers le système de distribution 18 commun à toutes les baies 12.

Dans l'exemple représenté sur la figure 3, chaque structure autoportante d'une baie 12 comporte plus de quatre empilements 14, en particulier un nombre d'empilements 14 supérieur ou égal à huit, notamment supérieur ou égal à seize, avantageusement compris entre trente-deux et cinquante-six.

Les empilements 14 de chaque structure autoportante d'une baie 12 sont par exemple organisés à chaque étage sous forme de rangées 32A à 32D d'empilements 14.

Dans l'exemple représenté sur la figure 3, au moins deux rangées 32A, 32B sont parallèles, et sont situées côte à côte sur le même étage, et au moins deux rangées 32C, 32D, sont situées respectivement au-dessus d'une rangée 32A, 32B à un autre étage de la baie 12.

Les empilements 14 situés à un étage d'une baie 12 sont distincts et sont espacés verticalement des empilements 14 situés à un autre étage de la baie 12.

Le distributeur 30 de chaque structure autoportante d'une baie 12 comporte une première conduite commune 34 de fourniture de premier fluide d'alimentation, une première conduite commune 36 de récupération de premier fluide produit, une deuxième conduite commune 38 de fourniture de deuxième fluide d'alimentation, et une deuxième conduite commune 40 de récupération de deuxième fluide produit, les conduites communes 34 à 40 étant destinées à se raccorder au système de distribution 18.

Le distributeur 30 comprend en outre, un branchement 44 à 50 propre à chaque rangée 32A à 32D pour raccorder fluidiquement chaque conduite commune 34 à 40 à chaque empilement 14 disposé sur une rangée 32A à 32D.

Les conduites communes 34 à 40 font saillie parallèlement les unes aux autres au-delà des empilements 14 et des branchements 44 à 50. Dans cet exemple, elles s'étendent horizontalement.

Chaque conduite commune 34 à 40 comporte une bride d'extrémité destinée à être raccordée de manière amovible au système de distribution 18.

Avantageusement, les brides de distribution d'au moins quatre conduites communes 34 à 40 d'une même baie 12 sont coplanaires, et sont situées dans un plan vertical perpendiculaire à l'axe de chaque conduite commune 34 à 40.

Dans cet exemple, les branchements 44 à 50 sont des rigides qui s'étendent tous parallèles aux conduites communes respectives 34 à 40.

Chaque branchement 44 à 50 est raccordé à une conduite commune respective 34 à 40 via une ou plusieurs branches transversales.

Ainsi, chaque branchement 44 est raccordé d'une part, à la première conduite commune 34, et d'autre part, aux premières entrées 22 d'alimentation en premier fluide d'alimentation de chaque empilement 14 d'une rangée 32A à 32D, via un piquage respectif.

La conduite commune 34 est donc la seule conduite alimentant en premier fluide d'alimentation tous les empilements 14 de la structure autoportante de la baie 12.

Chaque branchement 46 est raccordé d'une part, à la première conduite commune 36, et d'autre part, aux premières sorties 24 de récupération de premier fluide produit de chaque empilement 14 d'une rangée 32A à 32D, via un piquage respectif.

La conduite commune 36 est donc la seule conduite collectant le premier fluide produit par tous les empilements 14 de la structure autoportante de la baie 12.

Chaque branchement 48 est raccordé d'une part, à la deuxième conduite commune 38, et d'autre part, aux deuxièmes entrées 26 d'alimentation en deuxième fluide d'alimentation de chaque empilement 14 d'une rangée 32A à 32D, via un piquage respectif.

La conduite commune 38 est donc la seule conduite alimentant en deuxième fluide d'alimentation tous les empilements 14 de la structure autoportante de la baie 12.

Chaque branchement 50 est raccordé d'une part, à la deuxième conduite commune 40, et d'autre part, aux deuxièmes sorties 28 de récupération de deuxième fluide produit de chaque empilement 14 d'une rangée 32A à 32D, via un piquage respectif.

La conduite commune 40 est donc la seule conduite collectant le deuxième fluide produit par tous les empilements 14 de la structure autoportante de la baie 12.

En variante, les branchements 44 à 50 sont des flexibles qui sont raccordés d'une part, à au moins une clarinette rigide reliée aux conduites communes 34 à 40 et d'autre part, respectivement aux entrées 22, 26 et aux sorties 24, 28 de chaque empilement 14.

Comme illustré par les figures 1, 2 et 4, chaque structure autoportante d'une baie 12 est déplaçable d'un seul tenant entre une position d'opération normale, disposée dans le four 16, et une position de maintenance, disposée hors du four 16.

Chaque baie 12 est dépourvue de moyens de chauffage propres. Les empilements 14 de chaque structure autoportante de chaque baie 12 sont destinés à être chauffés conjointement avec les empilements 14 d'autres baies 12 contenus dans le même four 16 ou, le cas échéant, avec les empilements 14 des autres structures autoportantes de la même baie 12.

En référence aux figures 1 et 2, le four 16 comporte une enceinte calorifugée 60, destinée à recevoir simultanément au moins une baie 12 pour permettre le chauffage conjoint des empilements 14 présents sur plusieurs étages, un système 62 de chauffage de l'enceinte 60, et un système de brassage d'air 64 (visibles sur la figure 2), pour homogénéiser la température dans le four 16, notamment pendant les phases de démarrage et pendant les phases opératoires.

L'enceinte 60 est ici formée par des parois 65A à 65E délimitant un volume intérieur 66 parallélépipédique. Les parois 65A à 65E sont thermiquement isolées. Elles présentent par exemple une conductivité thermique inférieure à 0,5 W/m.K.

Dans cet exemple, le volume intérieur 66 de l'enceinte 60 est propre à recevoir au moins une baie 12, notamment entre une baie 12 et dix baies 12. Le volume intérieur 66 de l'enceinte 60 est ainsi propre à contenir plus de dix empilements 14, notamment plus de 100 empilements, par exemple plusieurs centaines d'empilements 14.

Le volume intérieur de l'enceinte 60 est par exemple supérieur à 9 m³ et est notamment compris entre 9 m³ et 100 m³.

Lorsque l'enceinte 60 reçoit la ou chaque baie 12, l'espace libre non occupé par des baies 12 dans le volume intérieur 66 est supérieur à 50% du volume d'une baie 12 afin de pouvoir installer dans l'enceinte 60, le système de chauffage 62, les moufles (par exemple en acier réfractaire) et le système de de brassage d'air interne ainsi que les conduites 34 à 40.

Les parois 65 comportent au moins une paroi latérale 65A placée en regard du système de distribution 18, et au moins une paroi latérale 65B, ici munie avantageusement de portes latérales 65C en regard de chaque baie 12, permettant l'accès au volume intérieur 66 pour insérer sélectivement chaque baie 12 dans le volume intérieur 66 ou pour l'extraire hors du volume intérieur 66.

Les parois 65 comportent en outre éventuellement une paroi inférieure 65D, et une paroi supérieure 65E fermant le volume intérieur 66 respectivement vers le haut et vers le bas.

La paroi latérale 65A est munie d'ouvertures 68 de passage des conduites communes 34 à 40, chaque ouverture 68 étant propre à être traversée par une conduite commune 34 à 40 respective d'une baie 12.

Ainsi, lorsque la structure autoportante d'une baie 12 occupe une position d'opération normale insérée dans le volume intérieur 66, chaque conduite commune 34 à 40 d'une structure autoportante d'une baie 12 fait saillie hors du volume intérieur 66 vers le système de distribution 18 à travers une ouverture respective 68 dans la paroi latérale 65A pour permettre le raccordement au système de distribution 18.

Avantageusement, lorsque la structure autoportante d'une baie 12 occupe sa position de maintenance hors du volume intérieur 66, les ouvertures de passage 68 situées en regard de la baie 12 dans sa position d'opération normale sont propres à être bouchées par un manchon isolant thermiquement (non représenté).

Ainsi, les autres structures autoportantes de baie 12 placées dans le volume intérieur 66 restent en position d'opération normale lors de la maintenance d'une des structure autoportantes de baie 12 extraite du volume intérieur 66.

Le système de chauffage 62 est propre à chauffer l'atmosphère gazeuse au sein du volume intérieur 66 pour porter cette atmosphère à une température supérieure à 450°C, par exemple comprise entre 450°C et 1300°C, notamment entre 600°C et 1200°C.

Il comporte dans cet exemple des résistances électriques. Les résistances sont par exemple installées verticalement entre l'enceinte calorifugée 60 et la ou chaque baie 12. Le four 16 comporte alors avantageusement une plaque d'isolation dite « moufle ».

Cette plaque protège les connectiques de la baie 12 d'une radiation directe. Il est également possible d'installer un système moufle/résistance/moufle entre des baies 12 lorsqu'elles sont côte à côte.

Généralement les résistances assurent une mise à température rapide de l'enceinte 60 pour le démarrage et si besoin un maintien de température en cas de fonctionnement endothermique des empilements 14 (susceptible de se produire en mode électrolyse).

Dans ce cas, les fluides d'alimentation introduits dans l'empilement 14 sont chauffés pour maintenir à température réactionnelle l'empilement 14. Ceci minimise la puissance électrique nécessaire à apporter dans l'empilement 14 pour permettre les réactions électrochimiques désirées particulièrement dans les configurations électrolyse/co-électrolyse.

Avantageusement, chaque résistance électrique est insérée dans au moins un tube métallique en acier muni d'orifices traversant.

La résistance électrique est alors protégée de l'extérieur durant les phases de démarrage et d'arrêt. Ce tube en acier comprend assez d'ouvertures pour permettre la circulation de l'atmosphère interne ainsi que les échanges thermiques.

Les résistances électriques sont propres à chauffer tout le volume intérieur 66 pour simultanément monter en température chaque baie 12 contenue dans le volume intérieur 66, et chaque empilement 14 contenu dans une baie 12.

En variante ou en complément, le système de chauffage comporte au moins un brûleur.

Le système de brassage 64 est par exemple formé par des brasseurs, disposés avantageusement dans la paroi supérieure 65E. Les brasseurs sont propres à brasser l'atmosphère gazeuse à l'intérieur du volume intérieur 66 pour améliorer l'homogénéité des échanges thermiques. Ils sont propres également à être utilisés pour forcer un refroidissement rapide et maîtrisé de la température du volume intérieur 66 au sein du four 16.

Les brasseurs améliorent notablement les transferts thermiques et diminuent significativement le temps de chauffe et de refroidissement. Ils sont propres à engendrer une circulation de gaz dans l'atmosphère autour de la ou de chaque baie 12.

Chaque brasseur comprend un organe rotatif de brassage, portant au moins une pale et un moteur d'entrainement en rotation de l'organe mobile.

Le brasseur est de préférence monté dans une paroi de l'enceinte 60, le moteur étant situé à l'extérieur du volume intérieur 66 et l'organe rotatif de brassage étant disposé dans le volume intérieur 66.

Avantageusement, le système de brassage 64 est associé à un système (non représenté) d'injection de gaz neutre (par exemple de l'azote) et éventuellement à un analyseur en ligne propre à détecter une éventuelle présence d'hydrogène sur un flux de sortie hors du four 16.

Le balayage assure une surpression dans le volume intérieur 66 de l'enceinte 60.

Ceci assure que l'enceinte 60 évolue dans une atmosphère inerte et limite les risques d'accidents (explosion, embrasement) en chassant des éventuels gaz de fuite.

Les entrées d'air et donc d'oxygène sont évitées empêchant une oxydation des composés de l'enceinte et de son contenu ainsi que des risques d'explosions/embrasement

La surpression limite en outre le risque de fuite des empilements 14.

L'étanchéité du four 16 est également maximisée pour réduire les pertes thermiques inhérentes au balayage et/ou au brassage.

Le système de brassage 64 permettant une homogénéisation de la température au sein de tout le volume intérieur 66, il autorise le fonctionnement en parallèle dans une même enceinte 66 de plusieurs baies 12 ou, le cas échéant de plusieurs étages de structures autoportantes d'une même baie 12.

Le brassage évite l'apparition de points chauds au sein du four 16 et donc une augmentation significative de température (par exemple plus de 10% par rapport à la moyenne des températures des empilements 14) de certains empilements 14 par rapport à d'autres.

La température des différents empilements 14 étant constante et homogène, le risque de casse d'empilements 14, et des disparités importantes de taux d'utilisation des empilements 14 est limité. Les durées de vie de tous les empilements 14 contenus au sein du volume intérieur 66 sont donc homogènes.

La disposition des empilements 14 sous forme de baies 12 au sein du volume intérieur 66 du four 16, et la mutualisation de l'alimentation de chaque baie 12 hors du four 16 par le système de distribution 18 optimise l'espace au sein du volume intérieur 66 pour qu'il soit occupé quasi exclusivement par les baies 12.

Ceci minimise également les contraintes thermiques s'appliquant sur toutes les conduites, puisque les branchements 44 à 50 de distribution dans chaque empilement 14 sont directement situés dans le volume intérieur 66 au sein de l'enceinte 60, et subissent les mêmes variations de température que les empilements 14.

En outre, des échanges thermiques peuvent se produire au sein du volume intérieur 66 entre les différentes conduites communes 34 à 40, et entre les différents branchements 44 à 50. Ceci simplifie la mise en œuvre du procédé, et supprime des échanges thermiques dédiés pour cette mise en oeuvre, particulièrement les échangeurs les plus onéreux opérant à la température la plus élevée du système.

La présence de structures autoportantes mobiles portant plusieurs empilements 14 et d'un four 16 commun à plusieurs baies 12 ou le cas échéant, à plusieurs structures autoportantes d'une baie 12, évite de devoir fournir un four particulier par empilement 14 ou pour un groupe restreint d'empilements 14 individuels, puisque les utilités sont mutualisées via le système de distribution 18, ainsi que le chauffage et la ventilation. Il n'est donc plus nécessaire de prévoir, pour chaque empilement 14, ou pour chaque groupe restreint d'empilements 14, un chauffage propre, un système propre d'utilités, et une ventilation propre.

En référence aux figures 1 et 2, le système de distribution 18 comporte un conduit 70 d'amenée de premier fluide d'alimentation, un conduit 72 d'évacuation de premier fluide produit, un conduit 74 d'amenée de deuxième fluide d'alimentation, et un conduit 76 d'évacuation de deuxième fluide produit.

En référence aux figures 1 et 2, le système de distribution 18 comporte en outre, associé à chaque baie 12, des piquages 80 à 86 raccordés respectivement à chaque conduit 70 à 76, chaque piquage 80 à 86 étant muni d'une vanne de connexion respective (vir 82A, 86A sur la figure 2) pour connecter chaque conduit 70 à 76 respectif à une conduite commune 34 à 40 respective de chaque baie 12.

Dans cet exemple, au moins un groupe de conduits 70 à 76 est associé à chaque four 16 pour être raccordé à chaque baie 12 contenue dans le four 16. Dans l'exemple représenté sur la figure 1, deux fours 16 sont disposés en parallèle l'un de l'autre, chaque four 16 étant muni d'un système de distribution 18 mutualisé pour les deux fours.

Dans l'exemple représenté sur la figure 1, les conduits 70 à 76 s'étendent parallèlement à un axe longitudinal A-A' du four 16, le long et en regard de la paroi latérale 65A.

Les piquages 80 à 86 font saillie transversalement par rapport à l'axe A-A', vers la paroi 65A, à l'extérieur de celle-ci.

Au moins une partie des extrémités libres des piquages 80 à 86 sont situées dans un même plan vertical parallèle à l'axe A-A'.

Les extrémités libres des conduites communes 34 à 40 sont propres à se raccorder de manière amovible aux extrémités libres des piquages 80 à 86 lorsque la ou chaque baie 12 est située dans le volume intérieur 66 de l'enceinte 60, les conduites communes 34 à 40 faisant saillie à travers les ouvertures latérales 68.

Ainsi, les connexions entre les piquages 80 à 86 et chaque baie 12 sont facilement accessibles afin de pouvoir être vérifiées et facilement déconnectées si une baie 12 ou le cas échéant, un structure autoportante d'une baie 12 doit être déplacée à l'extérieur du volume intérieur 66 d'un four 16.

La disposition des conduits 70 à 76 parallèlement à l'axe A-A' du four 16 augmente encore la compacité de l'installation 10, tout en maintenant un accès facile aux connexions.

Ainsi, pour une même surface au sol, la capacité de l'installation 10 en production d'électricité ou/et en production de fluide de combustible est augmentée. Au contraire, pour une même capacité de production d'électricité ou/et de fluide, l'encombrement de l'installation 10 est réduit.

Le fonctionnement de l'installation 10 va maintenant être décrit.

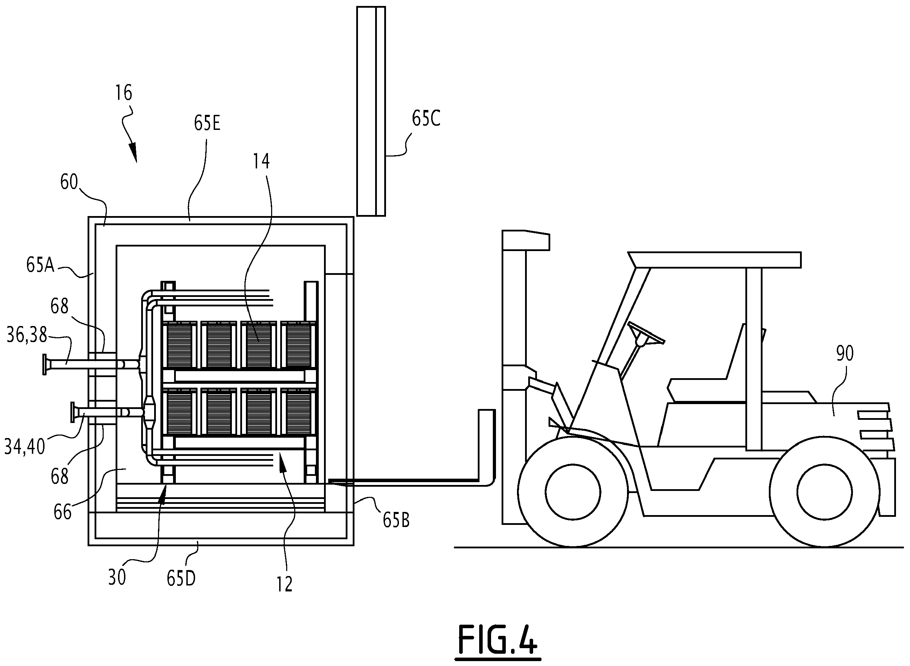

Initialement, avant le démarrage, chaque baie 12 ou chaque structure autoportante de baie 12 est mise en place dans le volume intérieur 66 du four 16, par exemple en utilisant un chariot élévateur 90, comme illustré sur la figure 4.

Lors du placement de chaque baie 12 ou de chaque structure autoportante de baie 12 à un emplacement dans le volume intérieur 66, la porte latérale 65C est ouverte, et la baie ou la structure autoportante de baie 12 est avancée vers la paroi latérale 65A en faisant passer les conduites communes 34 à 40 dans les ouvertures respectives 68.

Les extrémités libres des conduites communes 34 à 40 sont alors raccordées de manière amovible aux piquages respectifs 80 à 86 du système de distribution 18.

Lorsque toutes les baies 12 ou lorsque toutes les structures autoportantes d'une baie 12 sont installées dans l'enceinte 60, les portes latérales 65C sont refermées et le volume intérieur 66 est clos.

Le système de chauffage 62 est activé, en alimentant les résistances électriques pour porter l'atmosphère gazeuse à l'intérieur du volume intérieur 66 à une température supérieure à 450°C, notamment comprise entre 450°C et 1300°C, par exemple entre 600°C et 1200°C. Un chauffage progressif et conjoint soutenu par le brassage d'atmosphère interne de la pluralité de baies 12, ou le cas échéant, de chaque structure autoportante d'une baie 12 et de chaque empilement 14 contenu dans la ou dans chaque baie 12 est ainsi obtenu très simplement.

Ceci étant fait, les vannes sur les piquages 80 à 86 respectifs sont ouvertes. Le premier fluide d'alimentation s'écoule depuis le conduit d'amenée 70 à travers chaque piquage 80 jusqu'à la première conduite commune 34 de chaque baie 12, puis à travers chaque branchement 44 de la baie 12. Il pénètre alors dans chaque empilement 14 par l'intermédiaire de la première entrée 22 raccordée au branchement 44. Le premier fluide d'alimentation réagit sur la première électrode, engendrant un premier fluide produit.

Le premier fluide produit est collecté dans chaque première sortie 24, puis est rassemblé dans un branchement 46, avant d'atteindre la première conduite commune 36. Puis, le premier fluide produit est évacué à travers le conduit d'évacuation 72 via le piquage 82.

De même, le deuxième fluide d'alimentation s'écoule depuis le conduit d'amenée 74 à travers chaque piquage 84 jusqu'à la deuxième conduite commune 38 de chaque baie 12, puis à travers chaque branchement 48 de la baie 12. Il pénètre alors dans chaque empilement 14 par l'intermédiaire de la deuxième entrée 26 raccordée au branchement 48.

Le deuxième fluide d'alimentation réagit sur la deuxième électrode, produisant un deuxième fluide produit. Le deuxième fluide produit est évacué par la deuxième sortie 28, puis par un branchement 50 jusqu'à la deuxième conduite commune 40. Il est alors collecté dans le conduit d'évacuation 76 via le piquage 86.

Lorsqu'une maintenance doit être réalisée sur un empilement 14 particulier ou une baie particulière 12, la porte 65C située en regard de cette baie 12 est ouverte.

Les vannes 80A à 86A raccordées à cette baie 12 sont fermées, et les extrémités libres des conduites 34 à 40 de la baie 12 sont déconnectées des piquages 80 à 86.

La baie 12 ou le cas échéant, la structure autoportante de la baie 12 est alors retirée du volume intérieur 66, sans avoir à déplacer d'autres baies 12 ou, le cas échéant, d'autres structures autoportantes de la baie 12 et est amenée dans sa position de maintenance hors du volume intérieur 66. La baie 12 ou le cas échéant, la structure autoportante de la baie 12 peut être remise en place au même emplacement, une fois la maintenance effectuée, ou alternativement, être remplacée par une autre baie 12 ou le cas échéant, par une autre structure autoportante de baie 12.

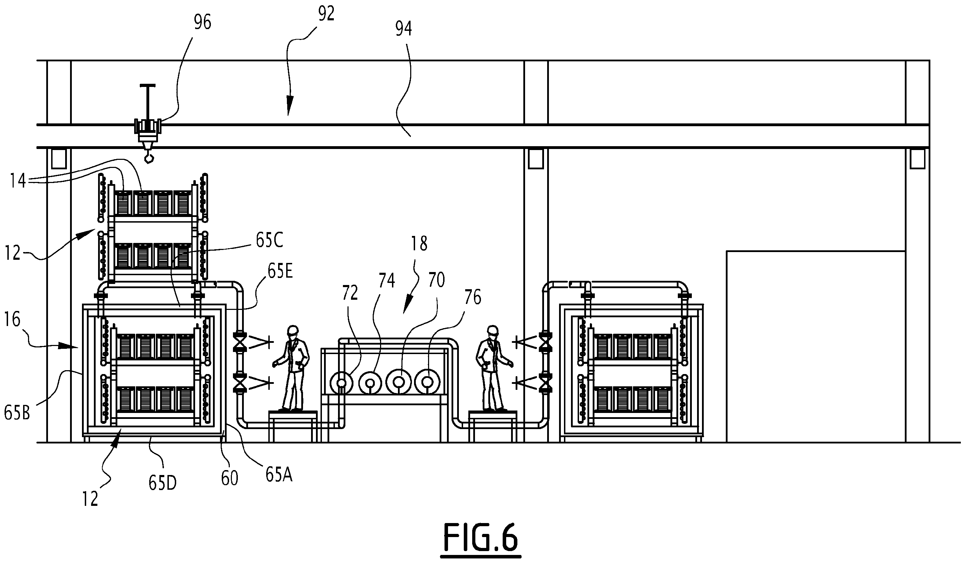

Dans la variante illustrée par la figure 6, les portes d'accès 65C au volume intérieur 66 sont situées sur la paroi supérieure 65E. Chaque baie 12, ou le cas échéant, chaque structure autoportante de baie 12 est alors déplaçable à travers la paroi supérieure 65E par l'intermédiaire d'un pont roulant 92, après démontage éventuel des tuyauteries de raccordement (« spool ») du système de distribution 18 situés au-dessus de l'enceinte 60.

Dans cet exemple, le pont roulant 92 comprend une poutre 94 horizontale située au-dessus du four 16, et un treuil 96 monté mobile le long de la poutre 94, transversalement par rapport à l'axe A-A' du four 16.

Dans cette configuration, le système de brassage 64 est par exemple installé sous la ou chaque baie 12. L'enceinte 60 est surélevée afin de localiser les moteurs des brasseurs sous l'enceinte 60.

Ainsi, aucune opération de démontage des ensembles moteurs et brasseurs n'est nécessaire pendant les opérations de maintenance.

Le fonctionnement de cette variante d'installation 10 est par ailleurs analogue à celui de l'installation 10 représentée sur les figures 1 à 5.

Dans une variante (non représentée), les conduits 70 à 76 du système de distribution 18 sont situés sous le four 16, les ouvertures 68 étant alors ménagées dans un plancher 65D de l'enceinte 60,

## Revendications

1. Installation (10) électrochimique, comportant :
- une pluralité d'empilements (14) de mise en œuvre de réactions électrochimiques, notamment pour la production d'électricité, la production de composés gazeux ou la co-électrolyse ;
- un four (16) de chauffage comprenant une enceinte (60) destinée à recevoir le ou chaque empilement (14), et un système de chauffage (62) ;
**caractérisée en ce que** l'installation (10) comporte au moins une baie (12), la ou chaque baie (12) comportant une structure autoportante comportant plusieurs étages superposés d'empilements (14) ou/et la ou chaque baie (12) comportant plusieurs structures autoportantes définissant plusieurs étages superposés d'empilements (14), chaque structure autoportante comprenant un distributeur de fluide (30) propre à alimenter chaque empilement (14) en au moins un fluide ou/et à collecter au moins un fluide à partir de chaque empilement (14),
l'enceinte (60) étant propre à contenir au moins une baie (12), les étages d'empilements (14) de la ou de chaque baie (12) contenue dans l'enceinte (60) étant destinés à être chauffés conjointement par le système de chauffage (62).

2. Installation (10) selon la revendication 1, comprenant une pluralité de baies (12), l'enceinte (60) étant propre à contenir la pluralité de baies (12), les empilements (14) des baies (12) contenues dans l'enceinte (60) étant destinés à être chauffés conjointement par le système de chauffage (62).

3. Installation (10) selon l'une quelconque des revendications précédentes, dans laquelle le four (16) de chauffage comporte intérieurement un système de brassage d'atmosphère (64) propre à brasser l'atmosphère dans l'enceinte (60) autour de chaque baie (12), et dans laquelle optionnellement le four de chauffage (16) comporte un injecteur de gaz neutre dans l'enceinte (60), propre à engendrer, lors du fonctionnement du four (16) de chauffage, une surpression de gaz dans l'enceinte (60), le four de chauffage (16) comportant avantageusement un analyseur de gaz extrait hors de l'enceinte.

4. Installation (10) selon l'une quelconque des revendications précédentes, dans laquelle le nombre d'empilements (14) dans chaque étage d'empilements (14) d'une baie (12) est supérieur à quatre.

5. Installation (10) selon l'une quelconque des revendications précédentes, comportant un système commun de distribution (18) de fluides situé hors du four (16), le système de distribution (18) comprenant au moins un conduit (70) d'amenée d'un premier fluide d'alimentation destiné à chaque empilement (14) et au moins un conduit (72) d'évacuation d'un premier fluide produit dans chaque empilement (14), le conduit (70) d'amenée de premier fluide d'alimentation et le conduit (72) d'évacuation de premier fluide produit étant destinés à être raccordés simultanément à une pluralité de structures autoportantes de baie (12) contenues dans le four (16), le distributeur de fluide (30) de chaque structure autoportante de baie (12) disposée dans l'enceinte (60) comportant :
- une première conduite commune d'alimentation (34) en premier fluide, raccordée à chaque empilement (14) de la baie (12) et destinée à être raccordée de manière amovible au conduit (70) d'amenée de premier fluide d'alimentation lorsque la structure autoportante de baie (12) est disposée dans l'enceinte (60) ;
- une première conduite commune de récupération (36) de premier fluide produit raccordée à chaque empilement (14) et destinée à être raccordée de manière amovible au conduit (72) d'évacuation de premier fluide produit lorsque la structure autoportante de baie (12) est disposée dans l'enceinte (60).

6. Installation (10) selon la revendication 5, dans lequel le système de distribution (18) comprend au moins un conduit (74) d'amenée d'un deuxième fluide d'alimentation destiné à chaque empilement (14) et au moins un conduit (76) d'évacuation d'un deuxième fluide produit dans chaque empilement (14), le conduit (74) d'amenée de deuxième fluide d'alimentation et le conduit (76) d'évacuation de deuxième fluide produit étant destinés à être raccordés simultanément à la pluralité de structures autoportantes de baie (12) contenues dans le four (16), le distributeur de fluide (30) de chaque structure autoportante de baie (12) disposée dans l'enceinte (60) comportant :
- une deuxième conduite commune d'alimentation (38) en deuxième fluide, raccordée à chaque empilement (14) de la baie (12) et destinée à être raccordée de manière amovible au conduit (74) d'amenée de deuxième fluide d'alimentation lorsque la structure autoportante de baie (12) est disposée dans l'enceinte (60) ;
- une deuxième conduite commune de récupération (40) de deuxième fluide produit raccordée à chaque empilement (14) et destinée à être raccordée de manière amovible au conduit (76) d'évacuation de deuxième fluide produit lorsque la structure autoportante de baie (12) est disposée dans l'enceinte (60).

7. Installation (10) selon la revendication 5 ou 6, dans laquelle le système de distribution (18) comporte pour chaque structure autoportante de baie (12) :
- un premier piquage d'alimentation (80) piqué sur le conduit (70) d'amenée de premier fluide d'alimentation et destiné à se connecter de manière amovible à la première conduite commune d'alimentation (34) en premier fluide de la structure autoportante de baie (12) ;
- un deuxième piquage d'évacuation (82) piqué sur le conduit (72) d'évacuation de premier fluide produit et destiné à se connecter de manière amovible à la première conduite commune de récupération (36) de premier fluide produit de la structure autoportante de baie (12).

8. Installation (10) selon l'une quelconque des revendications 5 à 7, dans laquelle l'enceinte (60) s'étend longitudinalement suivant un axe longitudinal (A-A'), plusieurs structures autoportantes de baie (12) étant disposées le long de l'axe longitudinal (A-A'), le conduit (70) d'amenée de premier fluide d'alimentation et le conduit (72) d'évacuation de premier fluide produit s'étendant parallèlement à l'axe longitudinal.

9. Installation (10) selon l'une quelconque des revendications précédentes, dans laquelle chaque structure autoportante de baie (12) est montée mobile par rapport au four (16) entre une position d'opération disposée dans l'enceinte (60) et une position de maintenance, disposée hors de l'enceinte (60).

10. Installation (10) selon la revendication 9, dans laquelle l'enceinte (60) présente, pour une baie (12) ou un groupe de baies (12), une porte latérale (65C), chaque structure autoportante de la baie (12) ou du groupe de baies (12) étant propre à être extraite à travers la porte latérale (65C) via un chariot élévateur (90) ou dans laquelle l'enceinte (60) comporte pour une baie (12) ou un groupe de baies (12), une porte supérieure (65C), chaque structure autoportante de la baie (12) ou du groupe de baies (12) étant propre à être extraite à travers la porte supérieure (65C) par un treuil (96) d'un pont roulant (92).

11. Installation (10) selon l'une quelconque des revendications précédentes, dans laquelle l'empilement (14) de production d'électricité est une pile à combustible en particulier une pile à combustible à oxyde solide, la pile à combustible étant propre à recevoir un premier fluide d'alimentation formé d'un combustible et à produire un premier fluide produit comprenant de l'eau, la pile à combustible étant propre à recevoir un deuxième fluide d'alimentation comprenant de l'air, et étant propre à produire un deuxième fluide produit
ou dans laquelle l'empilement (14) de production est un empilement (14) de génération d'au moins un composé gazeux, notamment une cellule d'électrolyse ou de co-électrolyse, la cellule d'électrolyse étant propre à recevoir un premier fluide d'alimentation comprenant de l'eau ou de l'eau et du dioxyde de carbone, et à produire un premier fluide produit comprenant de l'hydrogène ou de l'hydrogène et du monoxyde de carbone, la cellule d'électrolyse étant propre à recevoir un deuxième fluide d'alimentation comprenant de l'air, et à produire un deuxième fluide produit comprenant de l'oxygène.

12. Installation (10) selon l'une quelconque des revendications précédentes, dans laquelle le système de chauffage (62) comporte au moins une résistance électrique disposée dans l'enceinte (60), la ou chaque résistance électrique étant avantageusement insérée dans au moins un tube métallique muni d'orifices traversant et étant de préférence placée à l'arrière d'un moufle disposé dans l'enceinte (60).

13. Procédé électrochimique, comportant les étapes suivantes :
- fourniture d'une installation (10) selon l'une quelconque des revendications précédentes, l'enceinte (60) du four (16) contenant au moins une baie (12) comportant une structure autoportante comportant plusieurs étages superposés d'empilements (14) ou/et chaque baie (12) comportant plusieurs structures autoportantes définissant plusieurs étages superposés d'empilements (14);
- activation du système de chauffage (62) dans l'enceinte (60) pour chauffer conjointement les étages d'empilements (14) de la ou de chaque baie (12) contenue dans l'enceinte (60);
- mise en œuvre d'une réaction électrochimique dans chaque empilement (14) de chaque baie (12) contenue dans l'enceinte (60), notamment pour de la production d'électricité, de la production de composés gazeux et/ou de la co-électrolyse, et dans lequel optionnellement, le système de chauffage (62) porte l'atmosphère dans l'enceinte (60) au contact de la ou de chaque baie (12) à une température supérieure à 400°C, de préférence comprise entre 400°C et 1300°C, avantageusement entre 600°C et 1200°C.

14. Procédé selon la revendication 13, comportant un brassage de l'atmosphère autour de chaque baie (12) par un système de brassage (64) d'atmosphère, la température de chaque empilement (14) d'une baie (12) ou de chaque baie (12) étant au plus différente de 10% de la température moyenne des empilements (14) de la baie (12) ou de chaque baie (12) lors du chauffage conjoint des étages d'empilements (14).

15. Procédé selon la revendication 14, comportant lors du chauffage conjoint des étages d'empilement de la ou de chaque baie (12), une étape de retrait d'au moins une structure autoportante d'une baie (12) de l'enceinte (60), au moins une autre structure autoportante d'une baie (12) restant disposée dans l'enceinte (60), et avantageusement, après l'étape de retrait, une étape de remise en place de la structure autoportante de la baie (12) extraite, ou de mise en place d'une autre structure autoportante de baie (12) en remplacement de la structure autoportante de baie (12) extraite.
